# EUROPEAN PATENT APPLICATION

(11) **EP 1 840 069 A1**
(43) Date of publication of application: **03.10.2007**
(21) Application number: 05703808.5
(22) Date of filing: 19.01.2005
(51) Int. Cl.: B66B 23/24, B29C 47/08

(54) **APPARATUS FOR MANUFACTURING MOVING HAND-RAIL OF PASSENGER CONVEYER AND METHOD FOR MANUFACTURING MOVING HAND-RAIL**

(71) Applicant: MITSUBISHI DENKI KABUSHIKI KAISHA, Chiyoda-ku, Tokyo 100-8310 (JP)
(72) Inventor: HASHIOKA, Yutaka Mitsubishi Denki Kabushiki Kaisha, Chiyoda-ku Tokyo 1008310 (JP); MATSUYAMA, Jiro Mitsubishi Denki Kabushiki Kaisha, Chiyoda-ku Tokyo 1008310 (JP); NAGAOKA,Takahiko Mitsubishi Denki Kabushiki Kaisha, Chiyoda-ku Tokyo 1008310 (JP); KAWASAKI, Atsushi Mitsubishi Denki Kabushiki Kaisha, Chiyoda-ku Tokyo 1008310 (JP); NAKAMURA, Joichi TEXIA CO., LTD Daihaku Center Bld.10F, Hakata-ku Fukuka-shi Fukuoka 8120011 (JP)
(74) Representative: HOFFMANN EITLE
(86) International application number: PCT/JP2005/000571
(87) International publication number: WO 2006/077628

(57) **Abstract**

An object is to provide a manufacturing apparatus and a manufacturing method that can form in successive processes tooth-marks longitudinally at a regular pitch on the back side of a passenger-conveyor moving handrail.

The manufacturing apparatus includes: a material feed port (2) through which a thermoplastic resin is fed; a heater that heats the fed thermoplastic resin; a molding machine (1) that extrusion-molds the thermoplastic resin having been fluidized; and a tooth-mark forming tools (7), which is a tooth-mark forming device, that forms tooth-marks longitudinally at a regular pitch on the back side of a preformed moving-handrail material (5) having been extrusion-molded, while it is in a state ir a plastically deformable temperature range.

## Description

### Technical Field

The present invention relates to apparatus for and methods of manufacturing passenger-conveyor moving handrails.

### Background Art

In conventional passenger-conveyor apparatus, steps are moved driven by power from a drive motor. A drive system in which an endless moving handrail is turned around in the same direction as that of the steps is generally configured such that the back and front sides of the moving handrail are pressingly pinched by pairs of rollers: drive rollers and pressure rollers, and the drive rollers of the roller pairs, on the back side of the moving handrail are rotationally driven by the power transmitted from the drive motor. The moving handrail is driven by the rotational drive and friction force produced by the pressure so as to be moved at the same speed as that of the steps.

In the moving-handrail drive system commonly used, since the moving handrail is pressingly pinched by the pairs of rollers so as to be driven by the friction force produced by pressure from the drive rollers, it is impossible to prevent the moving handrail from slipping caused by the friction drive. In order to minimize the moving-handrail slippage, a large pressing force by the drive rollers is necessary. The large pressing force, however, has caused such problems as formation of pressure marks, occurrence of peeling, or pressure adhesion of debris or the like on the moving-handrail surface by reaction force from the pressure rollers.

In order to take measures against these problems, Japanese Patent Application Laid-Open Publication No. 1998-32491 (Patent Document 1) has disclosed a technology. In the conventional art, tooth-marks are formed longitudinally at a regular pitch on the back side of a moving handrail, and drive gears engaged with the tooth-marks formed on the back side of the moving handrail are provided, so that the moving handrail is driven by the drive gears rotated by power transmitted from a drive motor in a moving-handrail drive unit. Since the technology eliminates the need for such a large pressing force as has been used in a common drive system in which the back and front sides of a moving handrail are pressingly pinched with pairs of rollers: drive rollers and pressure rollers, respectively, such problems as formation of pressure marks, occurrence of peeling, or pressure adhesion of debris or the like on the moving-handrail surface are reduced. Moreover, since a moving-handrail drive system employs the gear engagement, a moving handrail does not slip contrary to the case with a drive system employing the drive rollers.

Patent Document 1: Japanese Patent Application Laid-Open Publication No. 1998-32491.

### Disclosure of Invention

When a passenger-conveyor moving handrail is manufactured by using the technology disclosed in Patent Document 1, a thermoplastic resin, that is, a material therefor is generally heated to enhance its fluidity so as to be extrusion-molded in accordance with a die shape. Accordingly, indentation shapes cannot be formed through an extrusion-mold process with a tooth shaped die. Although a method may be considered in which tooth-marks are formed by machining a preformed moving handrail in another process or by re-molding it with reheating, the two processes need to be performed at separate times, which has raised a problem of hindering productivity.

The present invention is to solve problems as described above, and an object of the invention is to provide apparatus for and methods of manufacturing a passenger-conveyor moving handrail that can form in successive processes tooth-marks longitudinally at a regular pitch on the back side of a moving handrail.

The present invention includes: a material feed port through which a thermoplastic resin is fed; a heater that heats the fed thermoplastic resin; a molding machine that extrusion-molds the thermoplastic resin having been fluidized; and a tooth-mark forming device that forms tooth-marks longitudinally at a regular pitch on the back side of a preformed moving-handrail material having been extrusion-molded into an approximate form of a moving handrail, while the thermoplastic resin is in a state in a plastically deformable temperature range.

Moreover, a method of manufacturing a passenger-conveyor moving handrail includes: a step of feeding a thermoplastic resin; a step of heating the fed thermoplastic resin; a step of extrusion-molding the thermoplastic resin having been fluidized; and a step of forming tooth-marks longitudinally at a regular pitch on the back side of a preformed moving-handrail material having been extrusion-molded into an approximate form of a moving handrail, while the thermoplastic resin is in a state in a plastically deformable temperature range.

Since the invention includes: the material feed port through which a thermoplastic resin is fed; the heater that heats the fed thermoplastic resin; the molding machine that extrusion-molds the thermoplastic resin having been fluidized; and the tooth-mark forming device that forms tooth-marks longitudinally at a regular pitch on the back side of a preformed moving-handrail material having been extrusion-molded into an approximate form of a moving handrail, while the thermoplastic resin is in a state in a plastically deformable temperature range, a manufacturing apparatus of a passenger-conveyor moving handrail can be obtained that is able to form in successive processes tooth-marks longitudinally at a regular pitch on the back side of a moving handrail.

Moreover, since the method of manufacturing a passenger-conveyor moving handrail includes: the step of feeding a thermoplastic resin; the step of heating the fed thermoplastic resin; the step of extrusion-molding the thermoplastic resin having been fluidized; and the step of forming tooth-marks longitudinally at a regular pitch on the back side of a preformed moving-handrail material extrusion-molded into an approximate form of a moving handrail, while the thermoplastic resin is in a state in a plastically deformable temperature range, the method of manufacturing a passenger-conveyor moving handrail can be provided that is able to form in successive processes tooth-marks longitudinally at a regular pitch on the back side of a moving handrail.

### Brief Description of Drawings

FIG. 1 is a view illustrating a manufacturing apparatus of a passenger-conveyor moving handrail, of Embodiment 1 of the present invention;
FIG. 2 is views in section taken along Line F-F, of a preformed passenger-conveyor handrail 5 of Embodiment 1 of the invention;
FIG. 3 is a detailed view of the section "D" indicated in FIG. 1;
FIG. 4 is a detailed view of the section "E" indicated in FIG. 1;
FIG. 5 is views illustrating a moving handrail 9 manufactured by the manufacturing apparatus of a passenger-conveyor moving handrail, of Embodiment 1 of the invention;
FIG. 6 is a view illustrating a manufacturing apparatus of a passenger-conveyor moving handrail, of Embodiment 2 of the present invention;
FIG. 7 is a view in section taken along Line G-G, of a preformed passenger-conveyor moving handrail 10 of Embodiment 2 of the invention;
FIG. 8 is structural views of a rack material 12 that is a material-in-process by using the manufacturing apparatus of a passenger-conveyor moving handrail in Embodiment 2 of the invention;
FIG. 9 is structural views of the moving handrail 9 manufactured by the manufacturing apparatus of a passenger-conveyor moving handrail in Embodiment 2 of the invention;
FIG. 10 is a view illustrating a manufacturing apparatus of a passenger-conveyor moving handrail, of Embodiment 3 of the present invention;
FIG. 11 is structural views of a rack material 13 that is a material-in-process by using the manufacturing apparatus of a passenger-conveyor moving handrail in Embodiment 3 of the invention;
FIG. 12 is structural views of the moving handrail 9 manufactured by the manufacturing apparatus of a passenger-conveyor moving handrail in Embodiment 3 of the invention;
FIG. 13 is a view illustrating a manufacturing apparatus of a passenger-conveyor moving handrail, of Embodiment 4 of the present invention;
FIG. 14 is a structural view of a passenger conveyor with using the moving handrail 9 in Embodiment 5 of the present invention; and
FIG. 15 is a detailed view of a moving-handrail drive unit 22 indicated in FIG. 14.

### Reference numerals

- 1:: molding machine,
- 2:: material feed port,
- 3:: extruder,
- 4:: extrusion port,
- 5:: preformed moving-handrail material,
- 5a:: back side of preformed moving-handrail material,
- 6:: pressing roller,
- 7:: tooth-mark forming tool,
- 8:: cooling unit,
- 9:: moving handrail,
- 10:: preformed moving-handrail material,
- 11:: guide gear,
- 12:: rack-formed material,
- 13:: rack-formed material,
- 14:: adhesive feeder,
- 15:: adhesive,
- 16:: drying unit,
- 17:: steps,
- 18:: drive motor,
- 19:: chain,
- 20:: sprocket,
- 21:: step chain,
- 22:: moving-handrail drive unit,
- 23:: handrail chain,
- 24:: handrail-guide rail,
- 25:: handrail sprocket,
- 26:: gear-drive chain,
- 27:: gear,
- 28:: sprocket,
- 29:: drive shaft,
- 30:: step-drive sprocket,
- 31:: handrail-drive sprocket,
- 32:: handrail sprocket,
- 33:: handrail sprocket,
- 34:: handrail sprocket,
- 35:: pressing roller, and
- 36: step: sprocket.

### Best Mode for Carrying Out the Invention

Hereinafter, aspects of the present invention will be explained in Embodiment 1 through Embodiment 6.

### Embodiment 1

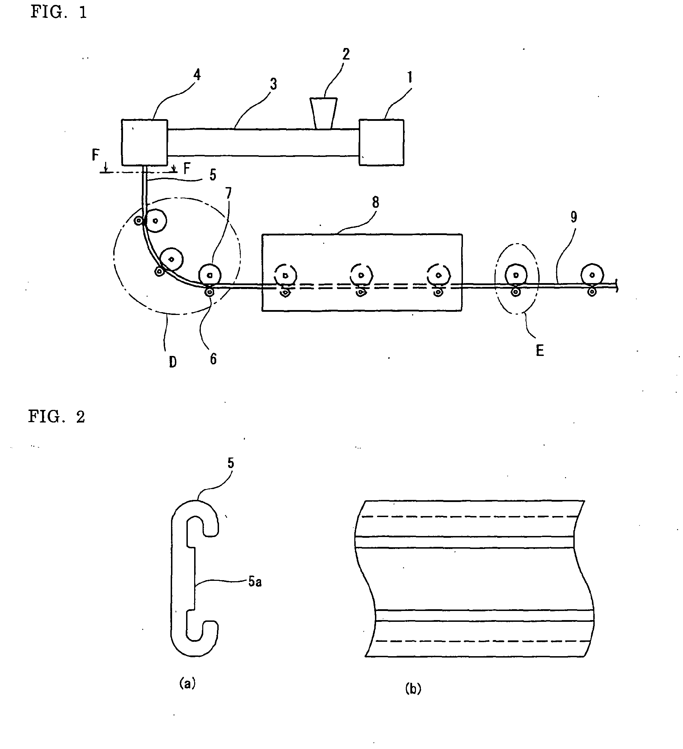

FIG. 1 is a view illustrating a manufacturing apparatus of a passenger-conveyor moving handrail, of Embodiment 1 of the present invention.
Referring to FIG. 1, a raw material of a thermoplastic resin, which is a major material for moving handrails, is fed into a material feed port 2 of a molding machine 1.
The raw material fed into the material feed port 2 is heated and mixed by a heater mounted in the molding machine 1, and is extrusion-molded from an extrusion port 4 by an extruder 3. Thereby, a preformed moving-handrail material 5 is extruded that is the thermoplastic resin having been formed into an approximate form of a moving handrail.
FIG. 2 is views in section taken along Line F-F, of the preformed passenger-conveyor moving handrail material 5 of Embodiment 1 of the invention. Tooth-marks are not yet formed at the moment when the preformed moving-handrail material 5 has been extruded.

The preformed moving-handrail material 5 is cooled after extruded from the extrusion port due to its exposure to ambient air. In a case of the preformed moving-handrail material 5 being made of a commonly used passenger-conveyor handrail material, if its temperature is 60 through 80 degrees Celsius, in which the thermoplastic resin still remains soft, the preformed moving-handrail material is in the plastically deformable temperature range in which the material is easy to process additionally.
Accordingly, with pressing rollers 6 that supports the preformed moving-handrail material 5 so as to move it in a predetermined direction and with tooth-mark forming tools 7 disposed opposing the respective rollers with the preformed moving-handrail material 5 interposing therebetween, the back side 5a of the preformed moving-handrail material 5, which is in a state in the plastically deformable temperature rage, is plastically deformed with teeth of the tooth-mark forming tools 7 rotated in accordance with the extrusion speed, so that tooth-marks are formed on the preformed moving-handrail material.

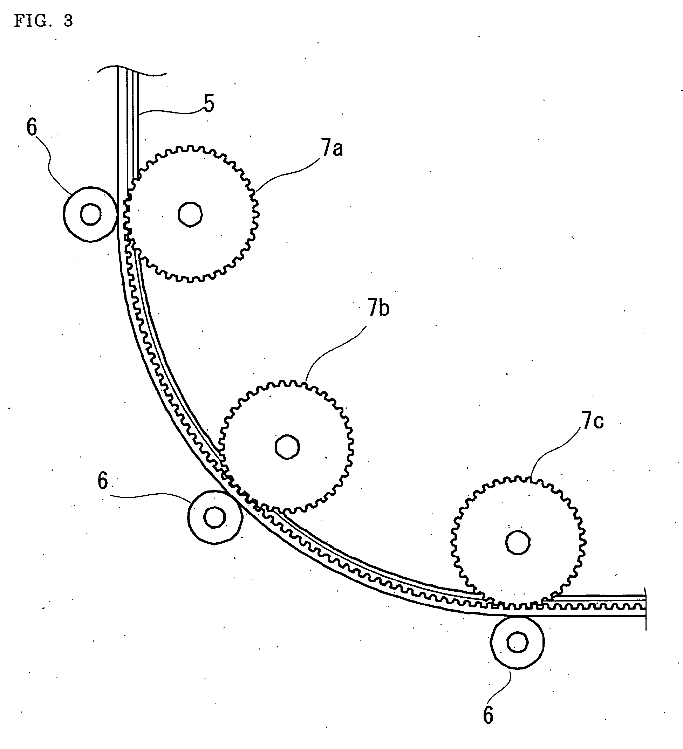

FIG. 3 is a detailed view of the section "D" indicated in FIG. 1. The pressing rollers 6 and tooth-mark forming tools 7a through 7c that are a tooth-mark forming device disposed opposing the rollers, exert a plastically deforming force on the preformed moving-handrail material 5 so as to form the tooth-marks on the back side 5a of the preformed moving-handrail material 5 in accordance with the shapes of the tooth-mark forming tools 7a through 7c. After that, the preformed moving-handrail material is cooled while passing through in a cooling unit 8 as shown in FIG. 1.

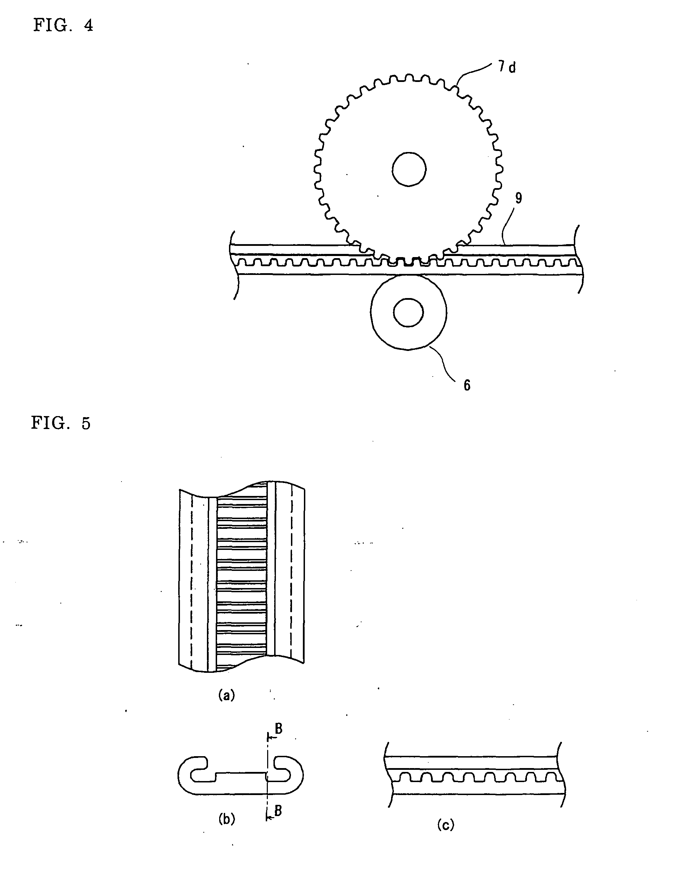

FIG. 4 is a detailed view of the section "E" indicated in FIG. 1. By a tooth-mark forming tool 7d disposed opposing one of the rollers 6, the moving handrail 9 is completed into the final state with minor adjustments to the tooth-marks.
Various shapes of tooth-marks can be formed on the moving handrail 9. With formation of tooth-marks based on, for example, an involute curve, power is smoothly transmitted, which can bring about smooth movement of the moving handrail and low emission of engaging-sound.

FIG. 5 is views illustrating the moving handrail 9 manufactured by using the manufacturing apparatus of a passenger-conveyor moving handrail, of Embodiment 1 of the invention: FIG. 5A is a view of the tooth-marks viewed from the top; FIG. 5B, a view in section viewed longitudinally; and FIG. 5C, a view in section taken along Line B-B.
In addition, the tooth-mark forming tools 7 are each designed in a tooth-shape taking into account material shrinkage due to temperature difference, readjustment against a restoring amount due to elastic deformation, and the like so that desired tooth-marks are formed on the back side of the moving handrail 9 in the final state.

Embodiment 1 includes: the material feed port 2 through which a thermoplastic resin is fed; the heater that heats the fed thermoplastic resin; the molding machine 1 that extrusion-molds the thermoplastic resin having been fluidized; and the tooth-mark forming tools 7, that is, the tooth-mark forming device that forms tooth-marks longitudinally at a regular pitch on the back side of the preformed moving-handrail material 5 while the thermoplastic resin is in a state in the plastically deformable temperature range after extrusion-molded. A manufacturing apparatus of a passenger-conveyor moving handrail, therefore, can be obtained that is able to form in one processing step tooth-marks longitudinally at a regular pitch on the back side of a moving handrail.

Moreover, a method of manufacturing a passenger-conveyor moving handrail includes: a step of feeding a thermoplastic resin; a step of heating the fed thermoplastic resin; a step of extrusion-molding the thermoplastic resin having been fluidized; and a step of forming tooth-marks longitudinally at a regular pitch on the back side of the preformed moving-handrail material 5 while the thermoplastic resin is in a state in the plastically deformable temperature range after extrusion molded. The method of manufacturing a passenger-conveyor moving handrail, therefore, can be provided that enables to form in one processing step tooth-marks longitudinally at a regular pitch on the back side of a moving handrail.

Furthermore, the moving handrail 9 manufactured by the apparatus for and method of manufacturing a moving handrail according to Embodiment 1, which can continuously form tooth-marks on the back side of a moving handrail in accordance with the extruding speed of extrusion-molding of the moving handrail, can be manufactured in a short time with a small number of facilities, which brings about an effect of contributing to low costs.

Furthermore, since the tooth-marks formed on the back side of the moving handrail 9 by the above-described method are defined as a standard rack-form with a necessary backlash for engagement with drive gears of a moving handrail drive unit, power can be smoothly transmitted, which can provide a comfortable passenger conveyor with smooth movement of the moving handrail 9 and low emission of engaging sound.
In addition, it has been described that the moving handrail 9 commonly used is in an additionally processable state at its material temperature of 60 through 80 degrees Celsius; however, the temperature range should be appropriately altered because the strength of a material differs depending on its types.

### Embodiment 2

In Embodiment 2, an explanation will be made on a case of a manufacturing apparatus that manufactures a moving handrail by joining a rack-formed material having been preformed, to a preformed moving handrail material while it is in a plastically deformable temperature range.

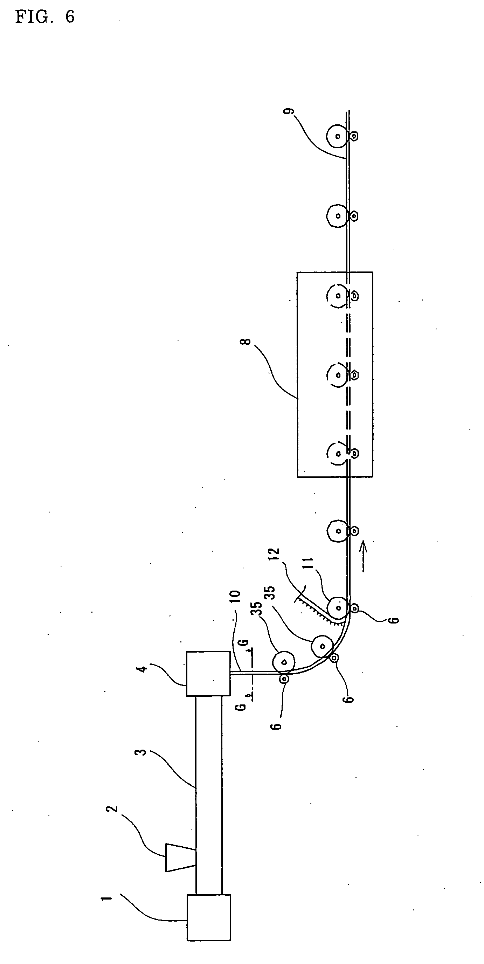

FIG. 6 is a view illustrating a manufacturing apparatus of the moving handrail 9 for passenger conveyors, of Embodiment 2 of the present invention. In FIG. 6, the same reference numerals as those in FIG. 1 refer to identical or equivalent components or parts, and those not shown here are the same as those in Embodiment 1.

Referring to FIG. 6, a raw material fed into the material feed port 2 is heated and mixed by the heater mounted in the molding machine 1, and is extrusion-molded from the extruding port 4 by the extruder 3. Thereby, a preformed moving-handrail material 10 is extruded that is the thermoplastic resin having been formed into an approximate form of a moving handrail.

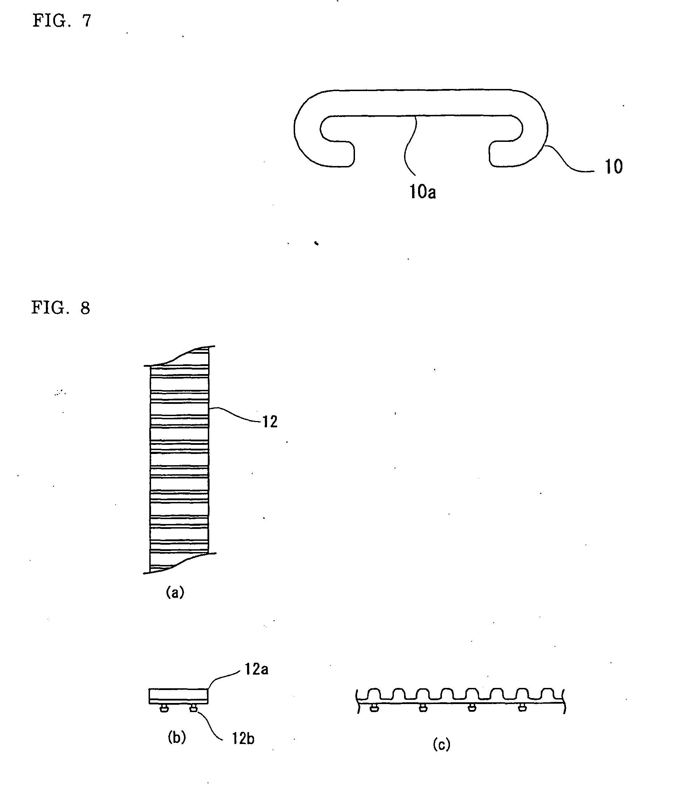

FIG. 7 is a view in section taken along Line G-G, illustrating the preformed moving handrail material 10 for a passenger conveyor, of Embodiment 2 of the invention. Tooth-marks are not yet formed at the moment when the preformed moving-handrail material 10 has been extruded.

The preformed moving handrail 10, the back side of which is in a state in a plastically deformable temperature range, for example, of 60 through 80 degrees Celsius, is moved in a predetermined direction, as supported by the pressing rollers 6 and pressing rollers 35. Then, the performed moving handrail 10 and a rack-formed material 12 are joined together by being layered together and passed through between one of the pressing rollers 6 and a guide gear 11 disposed opposing each other, which are a tooth-mark forming device. After that, the moving handrail 9 is completed with the preformed moving handrail material 10 and the rack-formed material 12 having been cooled by the cooling unit 8.

FIG. 8 is structural views of the rack-formed material 12 that is a material-in-process by using the manufacturing apparatus of a passenger-conveyor moving handrail in Embodiment 2 of the invention: FIG. 8A is a top view; FIG. 8B, a front view, and FIG. 8C, a side view. The rack-formed material 12 is composed of a tooth-shape portion 12a and projection portions 12b.

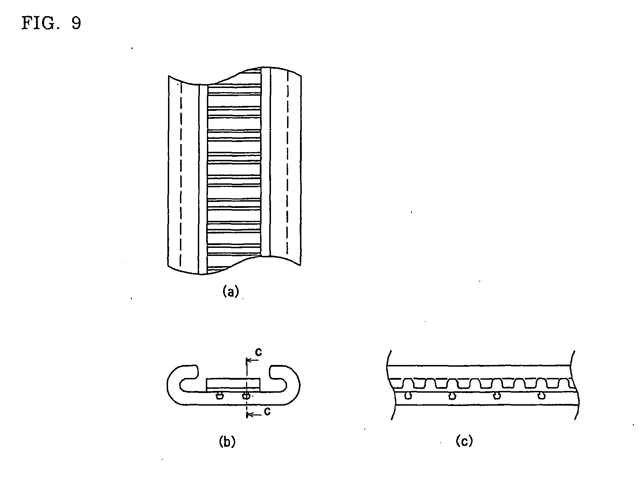

FIG. 9 is structural views of the moving handrail 9 manufactured by using the manufacturing apparatus of a passenger-conveyor moving handrail in Embodiment 2 of the invention: FIG. 9A is a top view; FIG. 9B, a view in section viewed longitudinally; and FIG. 9C, a view in section taken along Line C-C indicated in FIG. 9B.
In FIG. 6, the preformed moving handrail material 10 and the rack-formed material 12, as layered together, are passed through between the pressing roller 6 and the guide gear 11, while the preformed moving handrail material 10 is in the state in the plastically deformable temperature range. Thereby, the preformed moving handrail 10 is plastically deformed such that the projection portions 12b of the rack-formed material 12 are embedded therein. Then, the preformed moving handrail 10 is cooled to cure, which can serve to prevent the rack-formed material 12 and the preformed moving handrail material 10 from separating from each other because each of the projection portions 12b has a large diameter portion at the top.

Embodiment 2 includes: the material feed port 2 through which a thermoplastic resin is fed; the heater that heats the fed thermoplastic resin; the molding machine 1 that extrusion-molds the thermoplastic resin having been fluidized; and the pressing rollers 6 and the guide gear 11 between which the rack-formed material 12 and the preformed moving-handrail material 10 having been extrusion-molded are passed through, as layered together, while the preformed moving-handrail material 10 is in a state in its plastically deformable temperature range. A manufacturing apparatus of a passenger-conveyor moving handrail, therefore, can be obtained that is able to form in one processing step tooth-marks longitudinally at a regular pitch on the back side of a moving handrail.

Moreover, by using the manufacturing apparatus, a method of manufacturing a passenger-conveyor moving handrail can be provided that enables to form in the one processing step tooth-marks longitudinally at a regular pitch on the back side of the moving handrail.
Furthermore, the other effects obtained in Embodiment 1 can also be brought about in Embodiment 2.

### Embodiment 3

In Embodiment 3, an explanation will be made on a case of a manufacturing apparatus that manufactures a moving handrail by gluing a rack-formed material having been preformed, onto a preformed moving-handrail material.

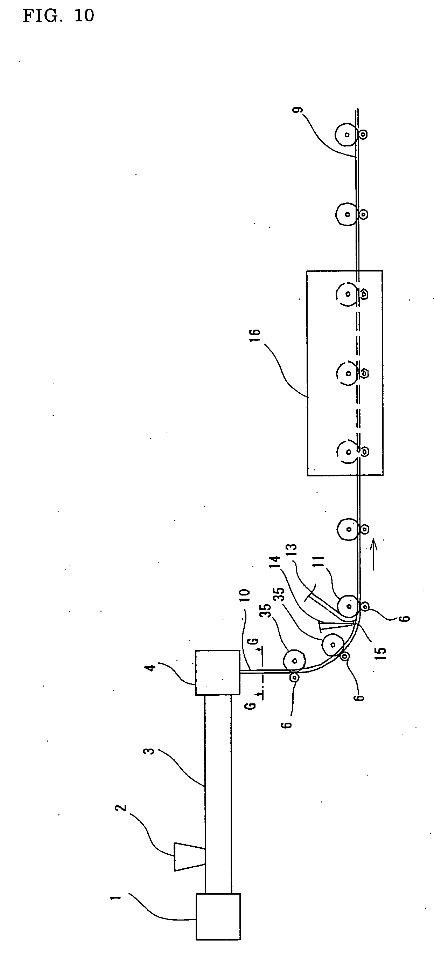

FIG. 10 is a view illustrating a manufacturing apparatus of a passenger-conveyor moving handrail, of Embodiment 3 of the present invention. In FIG. 10, the same reference numerals as those in FIG. 6 refer to identical or equivalent components or parts, and those not shown here are the same as those in Embodiment 2.

Referring to FIG. 10, a raw material fed into the material feed port 2 is heated and mixed by the heater mounted in the molding machine 1, and is extrusion-molded from the extruding port 4 by the extruder 3. Thereby, the preformed moving-handrail material 10 is extruded that is the thermoplastic resin having been formed into an approximate form of a moving handrail.

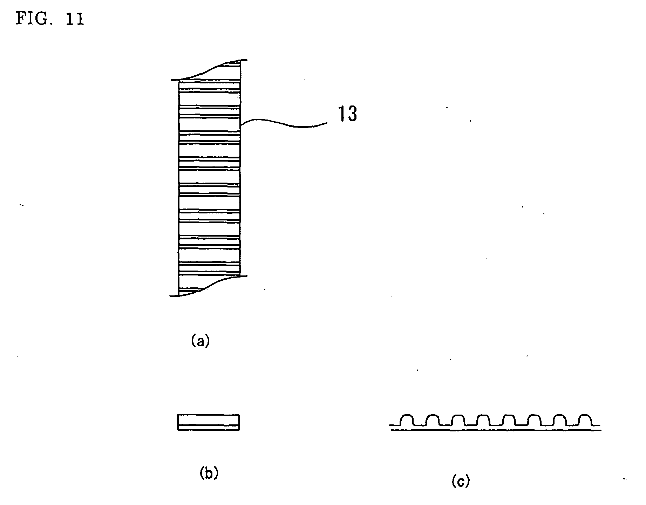

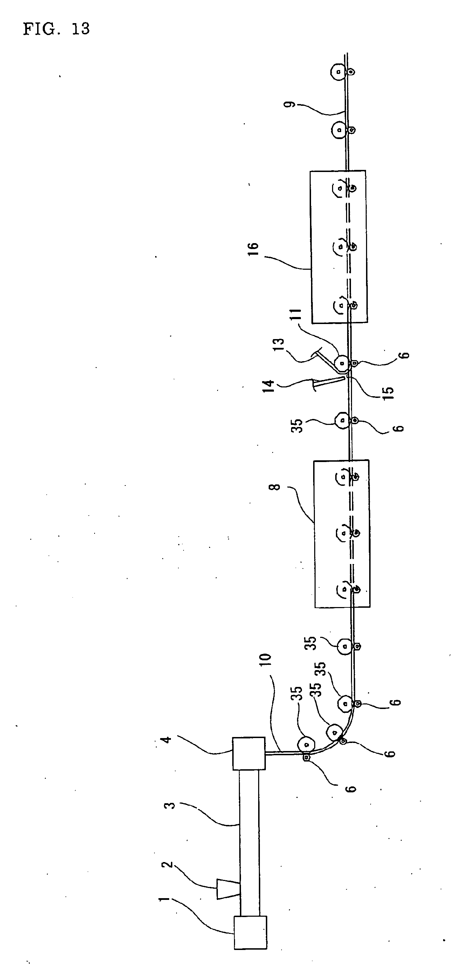

FIG. 11 is structural views of the rack-formed material 13 that is a material-in-process by using the manufacturing apparatus of a passenger-conveyor moving handrail in Embodiment 3 of the present invention: FIG. 13A is a top view; FIG. 13B, a front view, and FIG. 13C, a side view. The rack-formed material 13 has not such the projection portions 12b as the rack-formed material 12 in Embodiment 2, but is composed of a tooth-shape portion only.

In FIG. 10, the preformed moving-handrail material 10 is moved in a predetermined direction, as supported by the pressing rollers 6 and the pressing rollers 35. Then, just before the rack-formed material 13 and the preformed moving-handrail material 10 are layered together and passed through between one of the pressing rollers 6 and the guide gear 11, which configure part of a tooth-mark forming device, an adhesive 15 is fed into between the preformed moving-handrail material 10 and the rack-formed material 13 by an adhesive feeder 14, which configures part of the tooth-mark forming device. Thereby, the preformed moving-handrail material 10 and the rack-formed material 13 are glued together by being passed through between the pressing rollers 6 and the guide gear 11. After that, the moving handrail 9 is completed by drying the adhesive 15, which has been applied to between the preformed moving-handrail material 10 and the rack-formed material 13, by a drying unit 16.

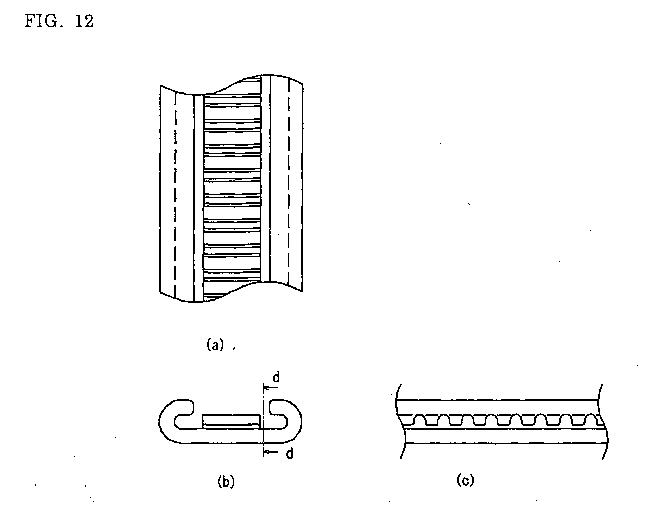

FIG. 12 is structural views of the moving handrail 9 manufactured by using the manufacturing apparatus of a passenger-conveyor moving handrail in Embodiment 3 of the invention: FIG. 12A is a top view; FIG. 12B, a front view; and FIG. 12C, a view in section taken along Line D-D indicated in FIG. 12B.

Embodiment 3 includes: the material feed port 2 through which a thermoplastic resin is fed; the heater that heats the fed thermoplastic resin; the molding machine 1 that extrusion-molds the thermoplastic resin having been fluidized; and the pressing rollers 6 and the guide gear 11 between which the rack-formed material 13 and the preformed moving-handrail material 10 having been extrusion-molded are layered together with an adhesive 15 injected therebetween and passed through. A manufacturing apparatus of a passenger-conveyor moving handrail, therefore, can be obtained that is able to form in one processing step tooth-marks longitudinally at a regular pitch on the back side of a moving handrail.

Moreover, by using the manufacturing apparatus, a method of manufacturing a passenger-conveyor moving handrail can be provided that enables to form in one processing step tooth-marks longitudinally at a regular pitch on the back side of a moving handrail.
Furthermore, the rack-formed material 13 is glued to the preformed moving-handrail material 10 after it has been cooled down to about room temperature, which can avoid generating between the preformed moving-handrail material 10 and the rack-formed material 13 internal stress due to the temperature difference between them at the gluing. Therefore, their separation and the like can be prevented.

### Embodiment 4

In Embodiment 4, an explanation will be made on a case of a manufacturing apparatus of the present invention by which a moving handrail is manufactured, by adding to a conventional apparatus of manufacturing a moving handrail having no rack-shape portion a facility that manufactures a moving handrail by gluing onto a preformed moving-handrail material a rack-formed material having been preformed.
FIG. 13 is a view illustrating a manufacturing apparatus of a passenger-conveyor moving handrail, of Embodiment 4 of the invention. In FIG. 13, the same reference numerals as those in FIG. 6 refer to identical or equivalent components and or parts; and those not shown here are the same as those in Embodiment 2.

Referring to FIG. 13, a raw material fed into the material feed port 2 is heated and mixed by the heater mounted in the molding machine 1, and is extrusion-molded from the extruding port 4 by the extruder 3. Thereby, the preformed moving-handrail material 10 is extruded that is the thermoplastic resin having been formed into an approximate form of a moving handrail. The preformed moving handrail material 10 has the same form as that of Embodiment 2, which has been illustrated in FIG. 7.

In FIG. 13, the preformed moving handrail material 10 is moved in a predetermined direction, as supported by the pressing rollers 6 and the pressing rollers 35. Then, the preformed moving handrail material 10 is cooled down to about room temperature by the cooling unit 8. In the case of the manufacturing apparatus that manufactures a moving handrail having no rack-formed portion, the moving handrail is completed at this stage as a product.
In Embodiment 4, however, a facility is subsequently added for the following process. The preformed moving handrail material 10 and the rack-formed material 13 are layered together and passed through between one of the pressing rollers 6 and the guide gear 11, which configure part of a tooth-mark forming device. Just before the passage, the adhesive 15 is fed into between the preformed moving-handrail material 10 and the rack-formed material 13 from the adhesive feeder 14, which configures part of the tooth-mark forming device. Thereby, the preformed moving-handrail material 10 and the rack-formed material 13 are glued together by being passed through between the pressing rollers 6 and the guide gear 11. After that, the same moving handrail 9 as that shown in FIG. 12 in Embodiment 3 is completed by drying the adhesive 15, applied to between the preformed moving-handrail material 10 and the rack-formed material 13, by the drying unit 16.

Embodiment 4 including: the material feed port 2 through which a thermoplastic resin is fed; the heater that heats the fed thermoplastic resin; the molding machine 1 that extrusion-molds the thermoplastic resin having been fluidized; the cooling unit 8 that cools the preformed moving-handrail material 10 having been extrusion-molded; and the pressing rollers 6 and the guide gear 11 between which the rack-formed material 13 and the preformed moving-handrail material 10 having been cooled down to about room temperature are passed through layered together with the adhesive 15 injected therebetween. A manufacturing apparatus of a passenger-conveyor moving handrail, therefore, can be obtained that is able to form in one processing step tooth-marks longitudinally at a regular pitch on the back side of a moving handrail.

Moreover, by using the manufacturing apparatus, a method of manufacturing a passenger-conveyor moving handrail can be provided that enables to form in the one processing step tooth-marks longitudinally at a regular pitch on the back side of a moving handrail.
Moreover, in Embodiment 4, only the rollers 6, the guide gear 11, the adhesive feeder 14, and the drying unit 16 may be added to a conventional manufacturing apparatus of a passenger-conveyor moving handrail having no rack-formed portion, which brings about an effect in that investment in facilities can be reduced.
Furthermore, the remaining effects obtained in Embodiment 3 can also be brought about in Embodiment 4.

### Embodiment 5

In Embodiment 5, an explanation will be made on an application of the moving handrail 9 manufactured according to Embodiment 1 through Embodiment 4.

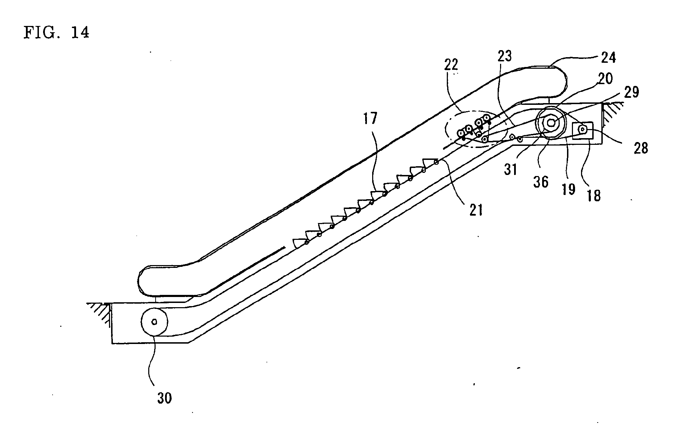

FIG. 14 is a structural view illustrating a passenger conveyor in Embodiment 5 of the present invention, incorporated with the moving handrail 9 manufactured according to Embodiment 1 through Embodiment 4.
Drive power obtained from rotation of the drive shaft of a drive motor 18 is transmitted from a sprocket 28 fixed to the rotate shaft of the drive motor 18 to a rotatably fixed sprocket 20 through a chain 19. The sprocket 20 is fixed to a rotatably fixed drive shaft 29, and a step-drive sprocket 30 and a handrail-drive sprocket 31 are coaxially fixed to the drive shaft 29. A step chain 21 that is also engaged with steps 17 is entrained around the step-drive sprocket 30 fixed to the drive shaft 29 mounted in the top machine room as well as a step sprocket 36 rotatably fixed to the bottom machine room, which allows the steps 17 to be moved by the drive power transmitted from the drive motor 18 to the steps 17. Moreover, the drive power can also be transmitted from the handrail-drive sprocket 31 to a moving-handrail drive unit 22 through a handrail chain 23. The moving-handrail drive unit 22 transmits the drive power to the moving handrail 9 looped around a handrail-guide rail 24, so that the moving handrail 9 is moved at the same speed as that of the steps 17.

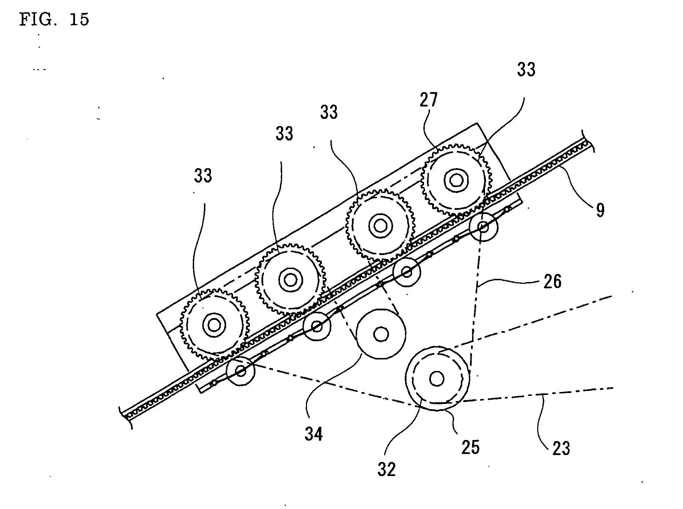

An explanation is made in detail on the moving-handrail drive unit 22. FIG. 15 is a detailed view illustrating the moving-handrail drive unit 22 indicated in FIG. 14. The handrail chain 23 engaged with the handrail-drive sprocket 31 is also engaged with a rotatably fixed handrail sprocket 32 in the moving-handrail drive unit 22. A gear-drive chain 26 is entrained around a handrail sprocket 25 coaxially fixed to the handrail sprocket 32, rotatably fixed handrail sprockets 33, and a rotatably fixed handrail sprocket 34. Since gears 27 are coaxially fixed to the rotatably fixed handrail sprockets 33, the gears can be rotated by the drive power from the sprocket 20. The gears 27 are also engaged with the moving handrail 9, so that the moving handrail 9 can be moved at the same speed as that of the steps 17 without slippage.
The drive power from the drive motor 18 is transmitted only through sprockets having teeth and chains engaged therewith, which therefore can eliminate the slippage associated with the drive.

### Industrial Applicability

A moving-handrail manufacturing apparatus and method according to the present invention are suited for production of moving handrails.

## Claims

1. A manufacturing apparatus of a passenger-conveyor moving handrail, comprising:
a material feed port through which a thermoplastic resin is fed;
a heater for heating the fed thermoplastic resin;
a molding machine for extrusion-molding the thermoplastic resin having been fluidized; and
a tooth-mark forming device for forming tooth-marks longitudinally at a regular pitch on a back side of a preformed moving-handrail material, while in a state in the plastically deformable temperature range of the preformed moving-handrail material extrusion-molded from the thermoplastic resin into an approximate form of the moving handrail.

2. The manufacturing apparatus of a passenger-conveyor moving handrail according to claim 1, wherein the tooth-mark forming device is provided with a tooth-mark forming tool.

3. The manufacturing apparatus of a passenger-conveyor moving handrail according to claim 1, wherein the tooth-mark forming device is provided with a pressing roller and a guide gear, for joining a rack-formed material to the preformed moving-handrail material.

4. A method of manufacturing a passenger-conveyor moving handrail, comprising:
a step of feeding a thermoplastic resin;
a step of heating the fed thermoplastic resin;
a step of extrusion-molding the thermoplastic resin having been fluidized; and
a step of forming tooth-marks longitudinally at a regular pitch on a back side of a preformed moving-handrail material, while in a state in a plastically deformable temperature range of the preformed moving-handrail material extrusion-molded from the thermoplastic resin into an approximate form of the moving handrail.

5. A manufacturing apparatus of a passenger-conveyor moving handrail, comprising:
a material feed port through which a thermoplastic resin is fed;
a heater for heating the fed thermoplastic resin;
a molding machine for extrusion-molding the thermoplastic resin having been fluidized; and
a pressing roller, a guide gear, and an adhesive feeder, for gluing with an adhesive a rack-formed material onto a preformed moving-handrail material extrusion-molded into an approximate form of the moving handrail.

6. A manufacturing apparatus of a passenger-conveyor moving handrail, comprising:
a material feed port through which a thermoplastic resin is fed;
a heater for heating the fed thermoplastic resin;
a molding machine for extrusion-molding the thermoplastic resin having been fluidized;
a cooling unit for cooling a preformed moving-handrail material extrusion-molded into an approximate form of the moving handrail; and
a pressing roller, a guide gear, and an adhesive feeder, for gluing with an adhesive a rack-formed material onto the preformed moving-handrail material, having been cooled.

7. A method of manufacturing a passenger-conveyor moving handrail, comprising:
a step of feeding a thermoplastic resin;
a step of heating the fed thermoplastic resin;
a step of extrusion-molding the thermoplastic resin having been fluidized; and
a step of gluing with an adhesive a rack-formed material onto a preformed moving handrail material extrusion-molded from the thermoplastic resin into an approximate form of the moving handrail.
